# EUROPEAN PATENT SPECIFICATION

(11) **EP 3 694 242 B1**
(45) Date of publication and mention of the grant of the patent: **26.07.2023**
(21) Application number: 19195365.2
(22) Date of filing: 04.09.2019
(51) Int. Cl.: H04W 12/30, H04W 12/42, G06F 9/54

(54) **METHOD AND USER EQUIPEMENT WITH AN INTEGRATED SUBSCRIBER IDENTITY MODULE (ISIM) FOR SHARING A ISIM FILE SYSTEM WITH A MODEM**
VERFAHREN UND BENUTZERGERÄT MIT EINEM INTEGRIERTEN TEILNEHMER-IDENTITÄTSMODUL (ISIM) ZUM TEILEN EINES ISIM-DATEISYSTEMS MIT EINEM MODEM
PROCÉDÉ ET ÉQUIPEMENT UTILISATEUR AVEC UN MODULE D'IDENTITÉ D'ABONNÉ INTEGRÉ (ISIM) POUR PARTAGER UN SYSTÈME DE FICHIERS ISIM AVEC UN MODEM

(30) Priority: 05.02.2019 EP 19155425
(43) Date of publication of application: 12.08.2020
(73) Proprietor: SHENZHEN GOODIX TECHNOLOGY CO., LTD., Shenzhen, Guangdong 518045 (CN)
(72) Inventor: Fröhlich, Martin, 01099 Dresden (DE)
(74) Representative: Lippert Stachow Patentanwälte Rechtsanwälte Partnerschaft mbB

(56) References cited:
- WO-A1-2015/184064
- WO-A1-2017/082966
- US-B1- 8 626 165
- Arm: "Unlocking the cellular IoT potential for chipset makers Whitepaper", , 1 February 2019 (2019-02-01), pages 1-7, XP055666839, Retrieved from the Internet: URL:https://learn.arm.com/rs/714-XIJ-402/i mages/Kigen-Unlocking_whitepaper.pdf [retrieved on 2020-02-10]

## Description

The invention relates to an improved Narrowband Internet of Things device (UE) comprising a modem and an integrated Subscriber Identity Module (iSIM), both combined on a modem chip.

The invention also relates to a method performed by the improved UE.

The invention is defined in the appended claims.

There are standards describing the "classical" SIM/UICC or the embedded version eSIM, see: https://www.gsma.com/esim/. Consumer benefits of such eSIMs include, that a simpler device setup is possible without the need to insert or replace a SIM card, see for example WO 2017/082966 A1 or WO 2015/184064 A1; devices can operate independently of a tethered smartphone, with their own subscriptions; and a range of new, enhanced mobile-connected devices benefit from the standardized eSIM.

So far, integrated SIMs (iSIMs) are not yet standardized. All 3GPP based cellular user equipments (UE), also known as Narrowband Internet of Things devices, such as mobile phone, require a mechanism to prove their identity against the cellular network and to exchange keys for a secure connection.

Therefore, the Universal Integrated Circuit Card (UICC - the hardware), with a USIM application (the software) running on it, is used. The UICC is a high secure hardware module that is connected (wired) to the UE. The USIM application contains all secret keys and provider specific information. The USIM application is provisioned by the cellular operator. All information of a SIM profile (ETSI TS 131 102) are stored in files at the SIM file system. The modem can access those files via read/write/select messages handled by the SIM. This requires the wakeup of the SIM and message communication. The disadvantage is high power consumption thereof and processing time.

The secret keys inside the USIM application stored on the UICC must not be read out. The keys are used to authenticate the UE against the core network with the help of a cryptographic algorithm. Furthermore, the USIM application generates the secret session keys for the UE.

Thus, each UE requires a USIM application (running on the UICC) to attach to a core network successfully.

The modem to UICC communication is done via wired serial interface which is standardized in ISO/IEC 7816-3.

The disadvantage of a separate UICC is it's embodiment as a separated secure hardware element, a SIM card, which is required in a UE. This causes additional system costs. Cost sensitive systems require a solution where the UICC becomes part of the modem inside the UE. Thus, the integration of the UICC (with the USIM application) is called for integrated Subscriber Identity Modules (iSIM).

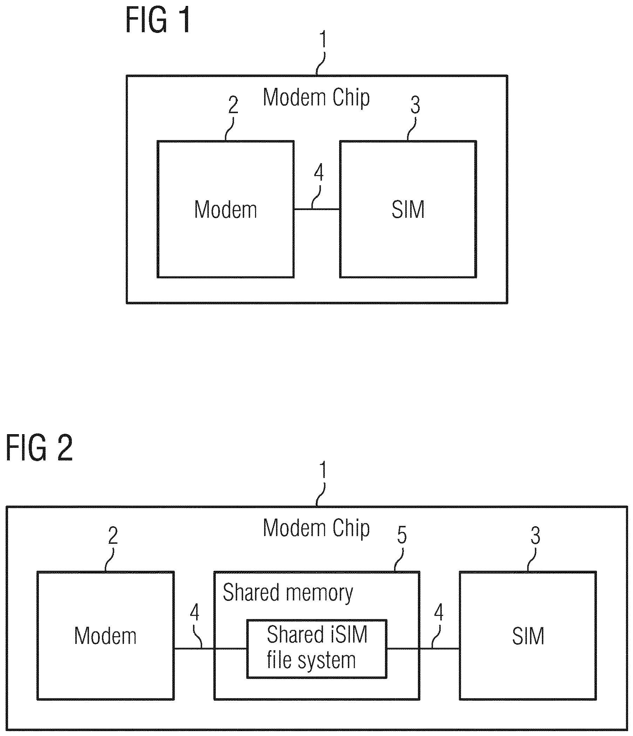

A quite simple solution for an iSIM is just to put the UICC chip and the modem chip in one package (SIP - System in Package) or to have the UICC chip as part of the modem chip (figure 1). This reduces chip size and hence system costs.

The objective of the invention is to further reduce the cost per UE and to reduce the power consumption of an integrated UICC chip and the processing time.

The objective of the invention will be solved by the method according to independent claim 1.

Waking-up the iSIM means that the iSIM is powered-on by the modem.

The advantage is to have a part of the iSIM file system that is stored in a shared memory block that can be accessed by the modem directly without running (starting) the iSIM. This reduces the power consumption, the communication overhead, and processing time. Since modem and iSIM do not need to exchange the profile information via messages, code can also be saved by not having such message handling. The shared memory block comprises shared information which is the sim profile which comprising the IMSI, access class, Permanent Forbidden PLMN list, Equivalent Home PLMN list and so on.

Another advantage is that the profile information is not encrypted anyway, but integrity protected so that storing this information in a shared memory block is not a security concern. Secret profile information, like the operator-key or the secret-key (required for network authentication) cannot be shared with the modem. This information is still stored in a separate memory directly on the iSIM.

The modem has read and / or write access. Information that can be stored in the shared memory comprise telephone numbers or telephone book, sms messages or updateable operator specific setting. Both, the iSIM and the modem can read this information. In principle the modem can have direct write access to the shared file system as well. This would reduce the overhead (iSIM wakeup and communication) of mandatory write back operation.

In another further embodiment of the inventive method, a protection hardware block arbitrates the access to the shared memory block. If direct write back is not allowed, a special hardware protection must be implemented. This hardware protection block prevents all write accesses initiated by the modem and grands only read accesses.

The object of the invention will also be solved by a memory block on the modem chip according to independent claim 3.

The invention will be explained in more detail using exemplary embodiments.

The appended drawings show
- Fig. 1: Basic components of an iSIM (state-of-the-art);
- Fig. 2: Shared iSIM file system between modem and iSIM.

The iSIM profile is stored in files organized in the SIM file system. The modem can read out these files. In the state-of-the-art this is done by a complicated protocol and requires a lot of processing time.

The idea of this invention is to have a shared file system between the iSIM and the modem. Some of the data in the file system is stored separately so that the modem can directly access this data without waking-up the iSIM or informing it that the modem now wants to access the data. The modem can read these data in plain text anyway without waking-up the iSIM, because the profile information, that is accessible via the file system, are not encrypted only integrity protected.

Thus, the filesystem can be stored unencrypted in the shared non-volatile memory as it is illustrated in figure 2.

Both, the iSIM and the modem can read this information.

Secret profile information, like the operator-key or the secret-key (required for network authentication) cannot be shared with the modem. Such information is stored in a separate part of the memory block - exclusively for the iSIM or directly on the iSIM.

In principle the modem can have direct write access to the shared file system. This would reduce the overhead (iSIM wakeup and communication) of mandatory write back operation.

If direct write back is not allowed, a special hardware protection is implemented. This hardware protection block prevents all write accesses initiated by the modem and grands only read accesses.

### List of Reference Signs

- 1: modem chip
- 2: modem
- 3: integrated Subsciber Identity Module
- 4: serial interface
- 5: shared memory block

## Claims

1. A method for improved access to information that includes a iSIM profile of a Narrowband Internet of Things device, UE, wherein the UE comprises a modem and an integrated Subscriber Identity Module, iSIM, both combined on a modem chip, wherein the modem and the iSIM share a common memory block on the modem chip and the modem accesses data comprising a SIM file system with the iSIM profile which is stored in the shared memory block without waking-up the iSIM and has read and / or write access to the iSIM profile information in the shared memory block without waking-up the iSIM, wherein the iSIM profile information is not encrypted.

2. The method according to claim 1, wherein a protection hardware block arbitrates the access to the shared memory block.

3. An improved Narrowband Internet of Things device, UE, comprising a modem (2) and an integrated Subscriber Identity Module (3), iSIM, both combined on a modem chip (1), wherein a memory block on the modem chip is shared by the modem and the iSIM, wherein a SIM file system with a iSIM profile is stored in the shared memory block, wherein the modem (2) is configured to access the SIM file system with the iSIM profile without waking-up the iSIM (3) and the modem has read and / or write access to the iSIM profile information in the shared memory block without waking-up the iSIM (3), wherein the iSIM profile information is not encrypted.

## Patentansprüche

1. Verfahren zum verbesserten Zugriff auf Informationen, die ein iSIM-Profil einer Schmalband-Internet-der-Dinge-Vorrichtung, UE, beinhalten, wobei die UE ein Modem und ein integriertes Teilnehmeridentitätsmodul, iSIM, umfasst, die beide auf einem Modemchip kombiniert sind, wobei das Modem und das iSIM einen gemeinsamen Speicherblock auf dem Modemchip teilen und das Modem auf Daten zugreift, die ein SIM-Dateisystem mit dem iSIM-Profil umfassen, das in dem geteilten Speicherblock gespeichert ist, ohne das iSIM aufzuwecken, und Lese- und/oder Schreibzugriff auf die iSIM-Profilinformationen in dem geteilten Speicherblock hat, ohne das iSIM aufzuwecken, wobei die iSIM-Profilinformationen nicht verschlüsselt sind.

2. Verfahren nach Anspruch 1, wobei ein Schutzhardwareblock den Zugriff auf den geteilten Speicherblock arbitriert.

3. Verbesserte Schmalband-Internet-der-Dinge-Vorrichtung, UE, umfassend ein Modem (2) und ein integriertes Teilnehmeridentitätsmodul (3), iSIM, die beide auf einem Modemchip (1) kombiniert sind, wobei ein Speicherblock auf dem Modemchip von dem Modem und dem iSIM geteilt wird, wobei ein SIM-Dateisystem mit einem iSIM-Profil in dem geteilten Speicherblock gespeichert ist, wobei das Modem (2) dazu ausgelegt ist, auf das SIM-Dateisystem mit dem iSIM-Profil zuzugreifen, ohne das iSIM (3) aufzuwecken, und das Modem Lese- und/oder Schreibzugriff auf die iSIM-Profilinformationen in dem geteilten Speicherblock hat, ohne das iSIM (3) aufzuwecken, wobei die iSIM-Profilinformationen nicht verschlüsselt sind.

## Revendications

1. Procédé pour améliorer l'accès à des informations qui comportent un profil d'iSIM d'un dispositif de l'Internet des objets à bande étroite, UE, dans lequel l'UE comprend un modem et un module d'identité d'abonné intégré, iSIM, tous deux combinés sur une puce de modem, dans lequel le modem et l'iSIM partagent un bloc de mémoire commun sur la puce de modem et le modem accède à des données comprenant un système de fichiers SIM au profil d'iSIM qui est stocké dans le bloc de mémoire partagé sans réveiller l'iSIM et dispose d'un accès en lecture et/ou en écriture aux informations de profil d'iSIM dans le bloc de mémoire partagé sans réveiller l'iSIM, dans lequel les informations de profil d'iSIM ne sont pas cryptées.

2. Procédé selon la revendication 1, dans lequel un bloc matériel de protection arbitre l'accès au bloc de mémoire partagé.

3. Dispositif de l'Internet des objets à bande étroite, UE, amélioré comprenant un modem (2) et un module d'identité d'abonné intégré (3), iSIM, tous deux combinés sur une puce de modem, dans lequel un bloc de mémoire commun sur la puce de modem est partagé par le modem et l'iSIM, dans lequel un système de fichiers SIM au profil d'iSIM est stocké dans le bloc de mémoire partagé, dans lequel le modem est configuré pour accéder au système de fichiers SIM au profil d'iSIM sans réveiller l'iSIM (3) et le modem dispose d'un accès en lecture et/ou en écriture aux informations de profil d'iSIM dans le bloc de mémoire partagé sans réveiller l'iSIM (3), dans lequel les informations de profil d'iSIM ne sont pas cryptées.
